# EUROPEAN PATENT APPLICATION

(11) **EP 2 879 043 A2**
(43) Date of publication of application: **03.06.2015**
(21) Application number: 14195137.6
(22) Date of filing: 27.11.2014
(51) Int. Cl.: G06F 3/12

(54) **Media processing device with enhanced media processing efficiency and connectivity features**

(30) Priority: 27.11.2013 US 201361909722 P; 06.12.2013 US 201361912980 P
(71) Applicant: ZIH Corp., Lincolnshire, IL 60069 (US)
(72) Inventor: Hill, Carol, Lincolnshire, IL 60069, (US); Phillips, James, Lincolnshire, IL 60069, (US); Schaefer, Mark, Lincolnshire, IL 60069, (US); Pekarske, Andrew, Mundelein, IL 60060, (US); Molek, Gordon, Vernon Hills, IL 60061, (US); Lowry, Leo, Lincolnshire, IL 60069, (US); Feldman, David, Lincolnshire, IL 60069, (US); Donato, Daniel F., Johnsburg, IL 60051, (US); Torchalski, Karl, Arlington Heights, IL 60004, (US); Tsirline, Boris Y., Glenview, IL 60025, (US); Fein, Michael, Ann Arbor, MI 48103, (US)
(74) Representative: Rees, Simon John Lewis

(57) **Abstract**

Apparatuses, methods, and computer program products are perform features associated with a USB Host port on a media processing device. An apparatus is provided comprising at least one processor and at least one memory including computer program instructions, the at least one memory and the computer program instructions being configured to, in cooperation with the at least one processor, cause the apparatus at least to query a USB mass storage device for all template files stored at the root of the USB mass storage device, the USB mass storage device being connected to a USB Host port of a media processing device. The at least one at least one memory and the computer program instructions are further configured to, in cooperation with the at least one processor, cause the apparatus to receive a selection of one or more of the template files to be processed and send the one or more selected files to a parser of the media processing device to be processed. If the selected file currently being processed comprises a reset command, the at least one at least one memory and the computer program instructions are further configured to, in cooperation with the at least one processor, cause the apparatus to store an indication of the position within the list of selected files where the selected file currently being processed is located; cause performance of a reset of the media processing device; and resume processing from a position in the list of selected files based on the indication.

## Description

### BACKGROUND OF THE INVENTION

Various embodiments of the invention are directed to printers and other systems for processing media including labels, receipt media, cards, and the like. Applicant has identified a number of deficiencies and problems associated with the manufacture, use, and maintenance of conventional printers. Through applied effort, ingenuity, and innovation, Applicant has solved many of these identified problems by developing a solution that is embodied by the present invention, which is described in detail below.

### BRIEF SUMMARY

Various embodiments of the present invention are directed to a device and associated system for processing media using consumable components such as ink ribbon and rolled media. Example embodiments may provide a media processing device that may be structured to enhance user serviceability, simplify printhead alignment, and ease media routing, loading, and unloading. Such embodiments are configured to provide these advantages while maintaining a compact size footprint for the media processing device. Embodiments of the present invention may further be configured with various features which enhance the user experience, increase media processing efficiency, and allow for future improvements and enhancements to be readily incorporated into the media processing device.

In one embodiment, an apparatus is provided comprising at least one processor and at least one memory including computer program instructions, the computer program instructions being configured to, in cooperation with the at least one processor, cause the apparatus at least to query a USB mass storage device for all template files stored at the root of the USB mass storage device, the USB mass storage device being connected to a USB Host port of a media processing device; receive a selection of one or more of the template files to be processed; send the one or more selected files to a parser of the media processing device to be processed; wherein processing comprises determining if a selected file currently being processed comprises a reset command; and if the selected file currently being processed comprises a reset command, store an indication of the position within the list of selected files where the selected file currently being processed is located; cause performance of a reset of the media processing device; and resume processing from a position in the list of selected files based on the indication.

In some embodiments, the apparatus further comprises wherein the at least one memory and the computer program instructions are further configured to, in cooperation with the at least one processor, cause the apparatus to first determine if a USB mass storage device is connected to the USB Host port; and if the USB mass storage device is not connected, cause an error message to be displayed.

In some embodiments, the apparatus further comprises wherein the processing of a selected file comprises printing the selected file.

In some embodiments, the apparatus further comprises wherein the at least one memory and the computer program instructions are further configured to, in cooperation with the at least one processor, cause the apparatus to modify the configuration of the media processing device based on data in the selected file containing a reset command.

In another embodiments, a method is provided comprising querying a USB mass storage device for all template files stored at the root of the USB mass storage device, the USB mass storage device being connected to a USB Host port of a media processing device; receiving a selection of one or more of the template files to be processed; sending the one or more selected files to a parser of the media processing device to be processed; wherein processing comprises determining if a selected file currently being processed comprises a reset command; and if the selected file currently being processed comprises a reset command, storing an indication of the position within the list of selected files where the selected file currently being processed is located; causing performance of a reset of the media processing device; and resuming processing from a position in the list of selected files based on the indication.

In some embodiments, the method further comprises determining if a USB mass storage device is connected to the USB Host port; and if the USB mass storage device is not connected, causing an error message to be displayed.

In some embodiments, the method further comprises wherein the processing of a selected file comprises printing the selected file.

In some embodiments, the method further comprises modifying the configuration of the media processing device based on data in the selected file containing a reset command.

In another embodiment, a computer program product is provided comprising at least one non-transitory computer-readable storage medium bearing computer program instructions embodied therein for use with a computer, the computer program instructions comprising program instructions configured to query a USB mass storage device for all template files stored at the root of the USB mass storage device, the USB mass storage device being connected to a USB Host port of a media processing device; receive a selection of one or more of the template files to be processed; send the one or more selected files to a parser of the media processing device to be processed; wherein processing comprises determining if a selected file currently being processed comprises a reset command; and if the selected file currently being processed comprises a reset command, store an indication of the position within the list of selected files where the selected file currently being processed is located; cause performance of a reset of the media processing device; and resume processing from a position in the list of selected files based on the indication.

In some embodiments, the computer program product further comprises computer program instructions comprising program instructions configured to first determine if a USB mass storage device is connected to the USB Host port; and if the USB mass storage device is not connected, cause an error message to be displayed.

In some embodiments, the computer program product further comprises wherein the processing of a selected file comprises printing the selected file.

In some embodiments, the computer program product further comprises computer program instructions comprising program instructions configured to modify the configuration of the media processing device based on data in the selected file containing a reset command.

In another embodiment, an apparatus is provided comprising at least one processor and at least one memory including computer program instructions, the at least one memory and the computer program instructions being configured to, in cooperation with the at least one processor, cause the apparatus at least to query a media processing device memory for files that can be stored to a USB mass storage device, the USB mass storage device being connected to a USB Host port of the media processing device; receive a selection of one or more of the files to be stored to the USB mass storage device; determine if one of the one or more selected files is a particular type of file, and if the one of the one or more selected files is a particular type of file, modify the file to convert it from a first representation to a second representation; and store the one or more selected files to the USB mass storage device.

In some embodiments, the apparatus further comprises wherein the at least one memory and the computer program instructions are further configured to, in cooperation with the at least one processor, cause the apparatus to first determine if a USB mass storage device is connected to the USB Host port; and if the USB mass storage device is not connected, cause an error message to be displayed.

In some embodiments, the apparatus further comprises wherein the first representation is an internal media processing device representation and the second representation is a readable representation.

In another embodiment, a method is provided comprising querying a media processing device memory for files that can be stored to a USB mass storage device, the USB mass storage device being connected to a USB Host port of the media processing device; receiving a selection of one or more of the files to be stored to the USB mass storage device; determining if one of the one or more selected files is a particular type of file, and if the one of the one or more selected files is a particular type of file, modifying the file to convert it from a first representation to a second representation; and storing the one or more selected files to the USB mass storage device.

In some embodiments, the method further comprises first determining if a USB mass storage device is connected to the USB Host port; and if the USB mass storage device is not connected, causing an error message to be displayed.

In some embodiments, the method further comprises wherein the first representation is an internal media processing device representation and the second representation is a readable representation.

In another embodiment, a computer program product is provided comprising at least one non-transitory computer-readable storage medium bearing computer program instructions embodied therein for use with a computer, the computer program instructions comprising program instructions configured to query a media processing device memory for files that can be stored to a USB mass storage device, the USB mass storage device being connected to a USB Host port of the media processing device; receive a selection of one or more of the files to be stored to the USB mass storage device; determine if one of the one or more selected files is a particular type of file, and if the one of the one or more selected files is a particular type of file, modify the file to convert it from a first representation to a second representation; and store the one or more selected files to the USB mass storage device.

In some embodiments, the computer program product further comprises the computer program instructions comprising program instructions configured to first determine if a USB mass storage device is connected to the USB Host port; and if the USB mass storage device is not connected, cause an error message to be displayed.

In some embodiments, the computer program product further comprises wherein the first representation is an internal media processing device representation and the second representation is a readable representation.

In another embodiment, an apparatus is provided comprising at least one processor and at least one memory including computer program instructions, the at least one memory and the computer program instructions being configured to, in cooperation with the at least one processor, cause the apparatus at least to determine if a USB mass storage device comprises a predefined directory structure, the USB mass storage device being connected to a USB Host port of a media processing device; and if the USB mass storage device comprises the predefined directory structure, process files located in the predefined directory structure automatically based on each file's directory location.

In some embodiments, the apparatus further comprises wherein the predefined directory structure is a mirror directory structure defined by one or more parameters. In some embodiments, the apparatus further comprises wherein the mirror directory structure comprises a first subdirectory, a second subdirectory, and a third subdirectory. In some embodiments, the apparatus further comprises wherein files located in the first subdirectory are used to update firmware for the media processing device. In some embodiments, the apparatus further comprises wherein files located in the second subdirectory are written to a memory of the media processing device. In some embodiments, the apparatus further comprises wherein files located in the third subdirectory are caused to be executed on the media processing device.

In some embodiments, the apparatus further comprises wherein the at least one memory and the computer program instructions are further configured to, in cooperation with the at least one processor, cause the apparatus to write a feedback file to the USB mass storage device.

In some embodiments, the apparatus further comprises wherein the at least one memory and the computer program instructions are further configured to, in cooperation with the at least one processor, cause the apparatus to write a data file to the media processing device comprising a listing of all files mirrored from the USB mass storage device and timestamps indicating when each file was mirrored.

In some embodiments, the apparatus further comprises wherein the data file is used to determine whether a file on the USB mass storage device that is already listed in the data file should be processed, wherein the file on the USB mass storage device is processed if it is more recent than the timestamp for the associated file in the data file.

In another embodiment, a method is provided comprising determining if a USB mass storage device comprises a predefined directory structure, the USB mass storage device being connected to a USB Host port of a media processing device; and if the USB mass storage device comprises the predefined directory structure, processing files located in the predefined directory structure automatically based on each file's directory location.

In some embodiments, the method further comprises wherein the predefined directory structure is a mirror directory structure defined by one or more parameters. In some embodiments, the method further comprises wherein the mirror directory structure comprises a first subdirectory, a second subdirectory, and a third subdirectory. In some embodiments, the method further comprises wherein files located in the first subdirectory are used to update firmware for the media processing device. In some embodiments, the method further comprises wherein files located in the second subdirectory are written to a memory of the media processing device. In some embodiments, the method further comprises wherein files located in the third subdirectory are caused to be executed on the media processing device.

In some embodiments, the method further comprises causing the apparatus to write a feedback file to the USB mass storage device.

In some embodiments, the method further comprises causing the apparatus to write a data file to the media processing device comprising a listing of all files mirrored from the USB mass storage device and timestamps indicating when each file was mirrored.

In some embodiments, the method further comprises wherein the data file is used to determine whether a file on the USB mass storage device that is already listed in the data file should be processed, wherein the file on the USB mass storage device is processed if it is more recent than the timestamp for the associated file in the data file.

In another embodiment, a computer program product is provided comprising at least one non-transitory computer-readable storage medium bearing computer program instructions embodied therein for use with a computer, the computer program instructions comprising program instructions configured to determine if a USB mass storage device comprises a predefined directory structure, the USB mass storage device being connected to a USB Host port of a media processing device; and if the USB mass storage device comprises the predefined directory structure, process files located in the predefined directory structure automatically based on each file's directory location.

In some embodiments, the computer program product further comprises wherein the predefined directory structure is a mirror directory structure defined by one or more parameters. In some embodiments, the computer program product further comprises wherein the mirror directory structure comprises a first subdirectory, a second subdirectory, and a third subdirectory. In some embodiments, the computer program product further comprises wherein files located in the first subdirectory are used to update firmware for the media processing device. In some embodiments, the computer program product further comprises wherein files located in the second subdirectory are written to a memory of the media processing device. In some embodiments, the computer program product further comprises wherein files located in the third subdirectory are caused to be executed on the media processing device.

In some embodiments, the computer program product further comprises computer program instructions comprising program instructions configured to write a feedback file to the USB mass storage device.

In some embodiments, the computer program product further comprises computer program instructions comprising program instructions configured to write a data file to the media processing device comprising a listing of all files mirrored from the USB mass storage device and timestamps indicating when each file was mirrored.

In some embodiments, the computer program product further comprises wherein the data file is used to determine whether a file on the USB mass storage device that is already listed in the data file should be processed, wherein the file on the USB mass storage device is processed if it is more recent than the timestamp for the associated file in the data file.

### BRIEF DESCRIPTION OF THE DRAWINGS

Having thus described certain embodiments of the invention in general terms, reference will now be made to the accompanying drawings, which are not necessarily drawn to scale, and wherein:
Figure 1 is a block diagram of an apparatus that may be specifically configured in accordance with an example embodiment of the present invention;
Figure 2 illustrates exemplary display screens that may be provided in accordance with an example embodiment of the present invention;
Figure 3 is a flow chart illustrating operations for USB Mirror that may be performed by an apparatus in accordance with an example embodiment of the present invention;
Figure 4 is a flow chart illustrating operations for Copy USB File that may be performed by an apparatus in accordance with an example embodiment of the present invention;
Figure 5 is a flow chart illustrating operations for Store File to USB that may be performed by an apparatus in accordance with an example embodiment of the present invention;
Figure 6 is a flow chart illustrating operations for Print USB File that may be performed by an apparatus in accordance with an example embodiment of the present invention;
Figure 7A illustrates an exemplary mapping of internal states to GPIO board outputs in accordance with an example embodiment of the present invention;
Figure 7B illustrates an exemplary mapping of GPIO board inputs to alerts in accordance with an example embodiment of the present invention;
Figure 8 illustrates an exemplary physical GPIO interface that implements total galvanic isolation in accordance with an example embodiment of the present invention; and
Figure 9 illustrates an exemplary GPIO board power source that is fully isolated in accordance with an example embodiment of the present invention.

### DETAILED DESCRIPTION

Some embodiments of the present invention will now be described more fully hereinafter with reference to the accompanying drawings, in which some, but not all, embodiments of the invention are shown. Indeed, various embodiments of the invention may be embodied in many different forms and should not be construed as limited to the embodiments set forth herein; rather, these embodiments are provided so that this disclosure will satisfy applicable legal requirements. Like reference numerals refer to like elements throughout.

Printers and media processing devices may be configured to print and/or encode media drawn from a roll or spool. Such media may include a web supporting a plurality of individually cut media components, such as adhesive-backed and carrier-supported labels, or the media may be a continuous web such as a spool of linerless media or direct thermal stock. Printers process (e.g., print, encode, etc.) the media by drawing the media from the spool and routing the media proximate various processing components (e.g., printhead, RFID reader/encoder, etc.). Processing the media from a spool may facilitate a continuous or batch printing process.

From time to time, printers exhaust the available supply of media such that a user must replace the media supply spool. Other consumables such as ribbon, printheads, and the like must also be periodically replaced. Once such consumables have been replaced, it is important that they be positioned/routed efficiently and precisely to ensure limited downtime and proper print quality.

Embodiments of the present invention are directed to an improved media processing device that is structured to enhance user serviceability, simplify printhead alignment, and ease media routing. Such embodiments are configured to provide these advantages while maintaining a compact size footprint. Further, embodiments of the present invention are configured to enhance media processing efficiency and quality. In some example embodiments, a media processing device may be configured with an LED-lighted, side-loading media path for easy and efficient ribbon and media installation.

### EXEMPLARY ARCHITECTURE

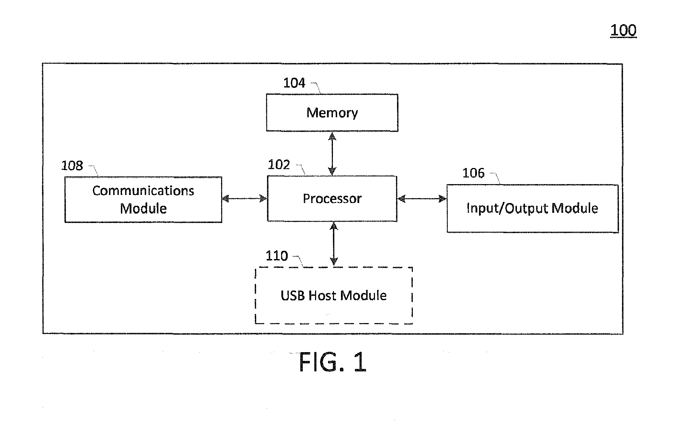

Embodiments of the present invention described herein may be embodied by a computing system, such as the apparatus 100 shown in Figure 1. As illustrated in Figure 1, the apparatus 100 may include a processor 102, a memory 104, input/output circuitry 106, communications circuitry 108, and optionally include USB Host circuitry 110, and the like. The apparatus 100 may be configured to execute the operations described above with respect to the various embodiments. Although these components 102-110 are described with respect to functional limitations, it should be understood that the particular implementations necessarily include the use of particular hardware. It should also be understood that certain of these components 102-110 may include similar or common hardware. For example, two sets of circuitry may both leverage use of the same processor, network interface, storage medium, or the like to perform their associated functions, such that duplicate hardware is not required for each set of circuitry. The use of the term "circuitry" as used herein with respect to components of the apparatus should therefore be understood to include particular hardware configured to perform the functions associated with the particular circuitry as described herein.

The term "circuitry" should be understood broadly to include hardware and, in some embodiments, software for configuring the hardware. For example, in some embodiments, "circuitry" may include processing circuitry, storage media, network interfaces, input/output devices, and the like. In some embodiments, other elements of the apparatus 100 may provide or supplement the functionality of particular circuitry. For example, the processor 102 may provide processing functionality, the memory 104 may provide storage functionality, the communications circuitry 108 may provide network interface functionality, and the like.

In some embodiments, the processor 102 (and/or co-processor or any other processing circuitry assisting or otherwise associated with the processor) may be in communication with the memory 104 via a bus for passing information among components of the apparatus. The memory 104 may be non-transitory and may include, for example, one or more volatile and/or non-volatile memories. In other words, for example, the memory may be an electronic storage device (e.g., a computer readable storage medium). The memory 104 may be configured to store information, data, content, applications, instructions, or the like, for enabling the apparatus to carry out various functions in accordance with example embodiments of the present invention.

The processor 102 may be embodied in a number of different ways and may, for example, include one or more processing devices configured to perform independently. Additionally or alternatively, the processor may include one or more processors configured in tandem via a bus to enable independent execution of instructions, pipelining, and/or multithreading. The use of the term "processing circuitry" may be understood to include a single core processor, a multi-core processor, multiple processors internal to the apparatus, and/or remote or "cloud" processors.

In an example embodiment, the processor 102 may be configured to execute instructions stored in the memory 104 or otherwise accessible to the processor. Alternatively or additionally, the processor may be configured to execute hard-coded functionality. As such, whether configured by hardware or software methods, or by a combination thereof, the processor may represent an entity (e.g., physically embodied in circuitry) capable of performing operations according to an embodiment of the present invention while configured accordingly. Alternatively, as another example, when the processor is embodied as an executor of software instructions, the instructions may specifically configure the processor to perform the algorithms and/or operations described herein when the instructions are executed.

In some embodiments, the apparatus 100 may include input/output circuitry 106 that may, in turn, be in communication with processor 102 to provide output to the user and, in some embodiments, to receive an indication of a user input. The input/output circuitry 106 may comprise a user interface and may include a display and may comprise a web user interface, a mobile application, a client device, a kiosk, or the like. In some embodiments, the input/output circuitry 106 may also include a keyboard, a mouse, a joystick, a touch screen, touch areas, soft keys, a microphone, a speaker, or other input/output mechanisms. The processor and/or user interface circuitry comprising the processor may be configured to control one or more functions of one or more user interface elements through computer program instructions (e.g., software and/or firmware) stored on a memory accessible to the processor (e.g., memory 104, and/or the like).

The communications circuitry 108 may be any means such as a device or circuitry embodied in either hardware or a combination of hardware and software that is configured to receive and/or transmit data from/to a network and/or any other device, circuitry, or module in communication with the apparatus 100. In this regard, the communications circuitry 108 may include, for example, a network interface for enabling communications with a wired or wireless communication network. For example, the communications circuitry 108 may include one or more network interface cards, antennae, buses, switches, routers, modems, and supporting hardware and/or software, or any other device suitable for enabling communications via a network. Additionally or alternatively, the communication interface may include the circuitry for interacting with the antenna(s) to cause transmission of signals via the antenna(s) or to handle receipt of signals received via the antenna(s).

The USB Host circuitry 110 includes hardware that may be configured to support the operation of a USB port configured to act as a USB Host port of the apparatus 100. The USB Host circuitry 110 may include hardware that may allow the apparatus to establish communications with, send data to, and/or receive data from other devices for the use of USB Host related processes. For example, the USB Host circuitry 100 may include a processor, such as the processor 102, to direct and/or control the input/output of information via the USB Host port, monitoring of operations, retrieving and storing of information in a memory, such as memory 104, and cause displaying of information, such as using input/output circuitry 106, and the like.

As will be appreciated, any such computer program instructions and/or other type of code may be loaded onto a computer, processor or other programmable apparatus's circuitry to produce a machine, such that the computer, processor other programmable circuitry that execute the code on the machine create the means for implementing various functions, including those described herein.

It is also noted that in some embodiments, one or more external systems (such as remote servers, a remote cloud computing system, and/or data storage system) may also be leveraged to provide at least some of the functionality discussed herein.

As described above and as will be appreciated based on this disclosure, embodiments of the present invention may be configured as methods, devices, and the like. Accordingly, embodiments may comprise various means including entirely of hardware or any combination of software and hardware. Furthermore, embodiments may take the form of a computer program product on at least one non-transitory computer-readable storage medium having computer-readable program instructions (e.g., computer software) embodied in the storage medium. Any suitable computer-readable storage medium may be utilized including non-transitory hard disks, CD-ROMs, flash memory, optical storage devices, or magnetic storage devices.

### RFID STREAMING

As noted above, embodiments of the present invention are directed to improving the efficiency with which media is printed and encoded. Media processing devices, such as printers and encoders, may be configured to print and/or encode to media, such as radio frequency identification (RFID) labels. The media may be provided to the processing device in a continuous form, such as fan-fold media stacks or a spool of media wound about a core. Each media substrate from the plurality of continuously fed media substrates may be separately printed and/or encoded prior to being presented to a user. The user may separate a media substrate unit from the continuous media at a tear-bar at the end of a media feed path.

Processing of the media substrates is generally performed sequentially such that a first media substrate is processed, and fed to the tear-bar whereupon the first media substrate is separated from the continuous stream of media substrates by a user or applicator in a "hand-off" process. Subsequently, the continuous stream of media substrates is back-fed to enable processing of the next media substrate that is to be presented. This back-feeding reduces through-put by requiring an additional, time consuming step in the processing sequence.

Embodiments described herein provide a method of processing media, particularly media including RFID tags that are encoded by the processing device, without requiring the additional back-feed operation. A "stream mode" may improve throughput for a media processing device by encoding RFID media, such as labels, tags, cards, etc. without necessitating a back-feed operation.

In a first example, a relatively large, "shipping style" label, such as a 4-inch by 6-inch label may be encoded with the leading edge of the label at a tear bar of a printer (i.e., when a prior label has been separated from the continuous media). The encoding may be performed by compensating for a shifted inlay position. The label itself may be large enough that a label that is positioned to be the next label produced by the processing device may be encoded in position, without requiring back-feeding. The shifted inlay position may locate the RFID inlay in a rearward position of the label relative to the direction that media is fed along the media feed path. This offset may allow the RFID inlay to be encoded while the media is positioned at a position relatively forward of the encoding station, with an adjacent, previously printed/encoded label at the tear bar of the media processing device. In this manner, a back-feed operation is not required after presenting a label at the tear bar in order to encode the subsequent label.

In a second example, a relatively small label, such as an "item-level" label, which may be 3-inches by 0.5-inches, may be encoded while a label preceding the encoded label is presented at the tear bar for a user or applicator. With a label of this size, the media processing device may be configured to encode a label that is third or fourth from the tear bar such that an encoded label is not immediately presented after encoding, but is presented in turn.

Embodiments according to the above described examples may reduce through-put time for a media processing device by eliminating the back-feed operation and continuously processing media in a media feed direction. Such improved efficiency can increase productivity of users and devices that operate in dependence of the media processing device.

### CONNECTIVITY FEATURES

Media processing devices according to example embodiments of the present invention may further be configured with enhanced connectivity features that enable improved interface capabilities. Embodiments may include USB 2.0 (Hi-Speed) Device Type-B communication ports. Such ports may include a high retention force to prevent inadvertent USB cable disconnects. Further, embodiments may include a cable retention feature to preclude unintentional disconnection of the USB connector through a pulling force on the USB cable.

While media processing devices of example embodiments may facilitate conventional 10/100 Ethernet connectivity, embodiments may further be configured for wireless connectivity. Media processing devices of example embodiments may include an antenna (or multiple antennas) in operable communication with a transmitter and a receiver. The media processing device may further include a processor which controls the provision of signals to and the receipt of signals from the transmitter and receiver, respectively. The signals may include signaling information in accordance with communication protocols, modulation types, and access types. By way of illustration, the media processing device may be capable of operating in accordance with any of a number of first, second, third and/or fourth-generation communication protocols, or the like. For example, the media processing device may be capable of operating in accordance with second-generation (2G) wireless communication protocols IS-136 (time division multiple access (TDMA)), GSM (global system for mobile communication), and IS-95 (code division multiple access (CDMA)), or with third-generation (3G) wireless communication protocols, such as Universal Mobile Telecommunications System (UMTS), CDMA2000, wideband CDMA (WCDMA) and time division-synchronous CDMA (TD-SCDMA), with 3.9G wireless communication protocol such as evolved UMTS Terrestrial Radio Access Network (E-UTRAN), with fourth generation (4G) wireless communication protocols (e.g., Long Term Evolution (LTE) or LTE-Advanced (LTE-A) or the like. As an alternative (or additionally), the media processing device may be capable of operating in accordance with non-cellular communication mechanisms. For example, the media processing device may be capable of communication in a wireless local area network (WLAN) such as IEEE 802.11a/b/g/n; wireless personal area network (WPAN) such as Bluetooth, IEEE 802.15.3 (High Rate WPAN) or IEEE 802.15.4 (Low Rate WPAN); white space network such as IEEE 802.1 1af (White-Fi) or IEEE 802.22 (Wireless Regional Area Network (WRAN)); wireless wide area network (WWAN) such as WiMAX; digital broadcasting network such as Digital Video Broadcasting (DVB), Digital Audio Broadcasting (DAB) or Digital Radio Mondiale (DRM); or other communication networks.

Embodiments of the present invention may further be configured with connectivity slots or ports to support current and future connectivity protocols. These ports may be unpopulated by default and available for a user to configure with optional interface cards as needed.

Bidirectional communication from a host to a printer has become an important feature for printers. Printing instructions, configuration files, and printer commands are sent to a printer from a host. Confirmation of data reception and responses to the printer commands are sent from the printer to the host. Alerts and various types of unsolicited messages may also be sent from the printer to the host. A variety of data communication methods may be used between the host and the printer, including RS-232, RS-234, parallel ports, IrDA, WiFi, Bluetooth, Ethernet, and USB.

### UNIVERSAL SERIAL BUS (USB)

USB has become a popular way for a host to send and/or receive data from a media processing device because it is relatively fast, reliable, and low cost. A host may also send and/or receive data and/or power from other USB devices using the USB interface, such as a memory stick, memory device, mass storage device, disk drive, communication device, network (e.g., Ethernet or WiFi) adapter, camera, scanner, card reader, PIN pad, cash drawer, customer display, sensors, printing devices, RFID readers, smart card encoders, keyboard, keyboard display unit, display, LCD screen, projector, hub, access point, modem, scale, security module, fingerprint reader, font card, radio, smartphone, industrial equipment, laminators, cutters, as well as printing devices. The host may also execute a variety of applications which allow it to interface with one or more of these devices to perform useful functions.

Meanwhile, media processing devices have also become more powerful and can run a variety of programs. While many of these are related to printing, some, such as RFID encoding and card reading, may not involve printing at all. This provides the user benefit of leveraging an existing media processing device to provide other important application features, or to leverage a media processing device's communication with a network to exchange status, settings, or data with memory devices or other media processing devices.

### USB HOST

Media processing devices of example embodiments may further be configured as a USB Host, e.g., having one or more USB ports configured to act in a USB Host capability. Such a media processing device may be connected to multiple functions or peripherals with the media processing device functioning as the master, while the functions or peripherals function as slaves, controlled by the master. This can be accomplished though USB connections. The functions or peripherals can include mass storage devices (e.g., Secure Digital cards, memory sticks, thumb drives, or disk drives), Human Interface Devices (e.g., keyboards, touch screens, scanners, etc.), laminators, applicators, etc.

According to example embodiments, media processing devices configured with a USB Host capability may be further configured to provide features and capabilities including profile loading, template filling, optional displays, USB mirror, copy files from USB, store files to USB, USB Host port lock out, and USB wireless print server.

### Profile Loading

For example, media processing devices of example embodiments may be configured to provide for profile loading whereby previously defined printer profiles may be moved from a mass storage device to the media processing device. This may allow for a user to load multiple use case profiles on a media processing device. In example embodiments, the user may be able store a media processing device profile on a USB mass storage device, and connect that USB mass storage device to a media processing device, thereby causing the profile content to be sent the media processing device.

For example, the USB mass storage device may contain a specifically named file such as "ProfileX.zpl" which may contain a list of file names to be sent to the media processing device. The media processing device may be configured to automatically detect the existence of the "ProfileX.zpl" file upon the user connecting the USB mass storage device to the media processing device, or the media processing device may alternatively be configured to not process "ProfileX.zpl" files automatically. For example, the media processing device may be configured, via a command such as a Set Get Do (SGD) command, to control automatic or manual processing of "ProfileX.zpl" files. In some example embodiments, for media processing devices having a display, when the media processing device is configured to not automatically process "ProfileX.zpl" files, the media processing device may display a prompt on the front panel to allow a user to manually select to process the profile. The files called out in the "ProfileX.zpl" file may be sent into a media processing device preparser/parser, similarly to a file arriving via a communication port.

In some example embodiments, the "ProfileX.zpl" files may be processed in ascending numeric order. In some example embodiments, a set of profile file processing rules may be created wherein a firmware file may be processed first when the firmware file is found to contain firmware different than what is currently loaded on the media processing device. In some example embodiments, firmware files may be processed first, such that they may be detected and sent into the media processing device's pre-parser and parser before all other files. Files other than firmware files may be processed in alphanumeric order. In some example embodiments, the media processing device may display each file name, such as on an LCD display, as it is transferred from the USB mass storage device to the media processing device.

### USB Mirror

Media processing devices of example embodiments may be configured to provide USB Mirror (similar to FTP/IP mirror functionality), whereby files currently stored at a specific location on a USB mass storage device may be copied to the media processing device's flash memory. The USB Mirror may also create and store a feedback file to a specific location on the USB mass storage device.

In example embodiments, the USB Mirror process may be configured to occur automatically on startup of the media processing device if a USB mass storage device is already inserted in the USB Host port. Additionally or alternatively, the USB Mirror process may be configured to mirror files upon insertion of the USB mass storage device when the media processing device is already powered on. For example, the media processing device may be configured such that when a USB mass storage device is mounted, the media processing device may search for the Mirror directory structure on the USB mass storage device. The media processing device may then process the files located in the Mirror directory structure USB mass storage device. In example embodiments, the media processing device may display, such as on an LCD display, the total number of files and the progress during the mirroring of the files.

In example embodiments, the USB mass storage device may contain a directory structure for use with USB mirror such as:
/appl
/commands
/data
/feedback
/files

In example embodiments, the media processing device may update its firmware using the firmware stored in the /appl directory when the media processing device detects that the firmware found in that directory is different than the firmware currently present on the media processing device. The media processing device may write the files found in the /files directory to the media processing device's flash memory as is. The media processing device may execute the files found in the /commands. The media processing device may write a feedback file to the USB mass storage device.

In example embodiments, the USB mirror may create a user visible file on the media processing device's flash memory that contains a list of all the files mirrored. The file may also contain a time stamp of when each file was mirrored. The media processing device may use the time stamps to determine whether a file should be mirrored again, such as if the file was updated.

The media processing device may be configured to use various commands, such as Set Get Do (SGD) commands, with USB mirror. For example, such commands may include:
usb.mirror.enable - allows/disallows the USB Mirror process (choices are on/off).
usb.mirror.auto - allows the USB Mirror process to run automatically when the USB mass storage device is inserted (choices are on/off).
usb.mirror.path - the base location where the /appl, /files, and /commands directories are located.
usb.mirror.appl_path - allows the media processing device to ignore any firmware file stored in the /appl directory and instead use the path stored in this command. usb.mirror.fetch - run USB Mirror.
usb.mirror.error_retry -the number of times to retry USB Mirror should an error be encountered.
usb.mirror.success - reports whether the last USB Mirror attempt was successful (may not be persistent over a power cycle).
usb.mirror.success_time - reports the time of the last successful USB Mirror attempt (may not be persistent over a power cycle).
usb.mirror.last_time - reports the time of the last USB Mirror attempt (may not be persistent over a power cycle).
usb.mirror.last_error - report the error of the last failed USB Mirror attempt (may not be persistent over a power cycle).
usb.mirror.reset_delay - the number of seconds to wait after a successful USB Mirror attempt before resetting the printer.
usb.mirror.feedback.auto - allows the USB Mirror feedback process to run automatically when the USB mass storage device is inserted (choices are on/off).
usb.mirror.feedback.path -the location where the feedback file will be written on the USB mass storage device.
usb.mirror.feedback odometer - number of times the USB Mirror process is performed.

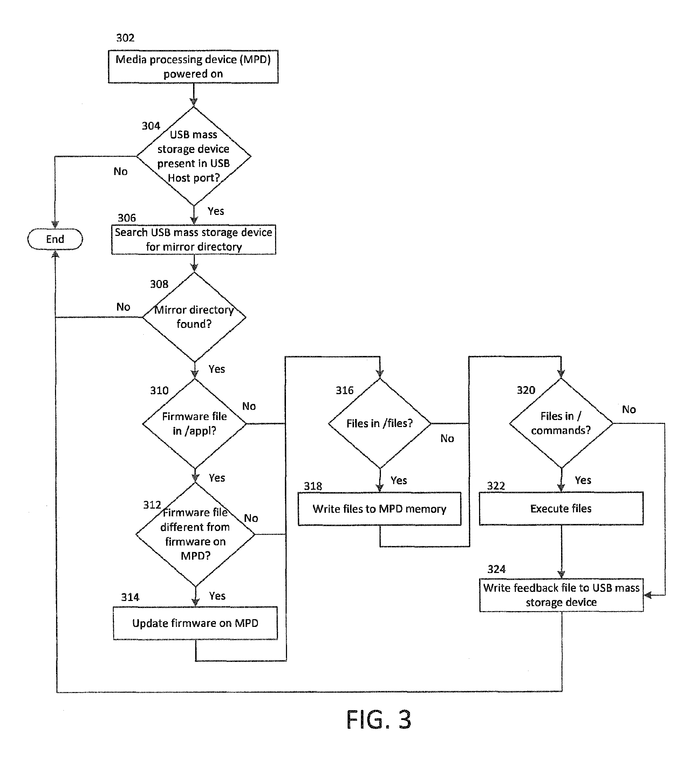

Figure 3 provides a flow chart illustrating operations for USB Mirror that may be performed by a media processing device in accordance with an example embodiment. At block 302, the media processing device may be powered on. At block 304, the media processing device may determine whether a USB mass storage device is connected to the USB Host port, using means such as processor 102, memory 104, USB Host circuitry 110, or the like. If no USB Mass storage device is found, operation end. If a USB mass storage device is connected, operation continues to block 306. At block 306, the media processing device may search the USB mass storage device for a mirror directory structure, using means such as processor 102, memory 104, USB Host circuitry 110, or the like. At block 308, the media processing device may determine if the mirror directory structure was found on the USB mass storage device. If the mirror directory structure is not found at block 308, operations end. If the mirror directory structure is found, operations continue to block 310.

At block 310, the media processing device may determine whether there is a firmware file stored in the /appl subdirectory of the mirror directory structure, using means such as processor 102, memory 104, USB Host circuitry 110, or the like. If a firmware file is found the media processing device may determine if the found firmware file is a different version from the firmware on the media processing device at block 312, using means such as processor 102, memory 104, USB Host circuitry 110, or the like. If the firmware file is a different version, the media processing device may update its firmware using the found firmware file at block 314, using means such as processor 102, memory 104, USB Host circuitry 110, or the like. Operations then continue to block 316. If no firmware file was found, or if the firmware file and the media processing firmware are the same version, operations continue to block 316.

At block 316, the media processing device may determine whether there are one or more files stored in the /files subdirectory of the mirror directory structure, using means such as processor 102, memory 104, USB Host circuitry 110, or the like. If one or more files are found, the media processing device may write the files to the media processing device's memory at block 318, using means such as processor 102, memory 104, USB Host circuitry 110, or the like. Operations then continue to block 320. If no files are found in the /files subdirectory, operations continue to block 320.

At block 320, the media processing device may determine whether there are one or more files stored in the /commands subdirectory of the mirror directory structure, using means such as processor 102, memory 104, USB Host circuitry 110, or the like. If one or more files are found, the media processing device may cause execution of the files in the /command subdirectory at block 322, using means such as processor 102, memory 104, USB Host circuitry 110, or the like. Operations then continue to block 324. If no files are found in the /commands subdirectory, operations continue to block 324.

At block 324, the media processing device may write a feedback file regarding the USB mirror operations to the USB mass storage device. Operations may then end.

### Copy Files from USB

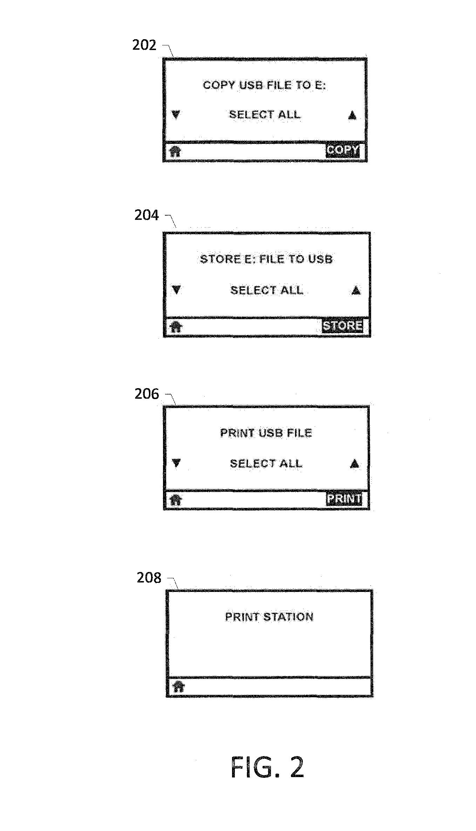

The USB host functionality may allow media processing devices to copy files from the mass storage device to a memory of the media processing device. Such files may include media processing device settings, software/firmware updates, languages, communication protocols, etc. Such file transfers and software updates may also be facilitated by a use interface. In some example embodiments, only readable files may be transferred from the USB mass storage device to the media processing device's memory. In example embodiments, the media processing device may allow for either the selection of individual files or the selection of all available files for copying to the media processing device memory. Display screen 202 of Figure 2 illustrates an exemplary menu display of a media processing apparatus that may be used to access the Copy Files from USB features.

In example embodiments, when a USB mass storage device is connected to the media processing device and this feature is selected, the media processing device may query the USB mass storage device for all files stored at the root level of the USB mass storage device. The media processing device may allow a user to navigate through the list of files to a particular file and select the file to be copied from the USB mass storage device to the media processing device's memory. For example, the media processing device may allow a user to scroll through the list, vertically, up and down, with the top wrapping to the bottom and the bottom wrapping to the top. The media processing device may provide a "SELECT ALL" option at the top of the list of files, which when selected would cause all files in the list to be transferred to the media processing device's memory.

In example embodiments, the file contents are not modified (post-processed) during the copying from the USB mass storage device to the media processing device's memory (*i.e.,* template files will be copied as is and not modified like may be done when storing from the media processing device's memory to a USB mass storage device, as described below). In example embodiments, the media processing device may display, such as on an LCD display, the total number of files and the progress during the copying of the files.

In some example embodiments, if a firmware file is chosen from the list of files to be copied, the media processing device may identify that file as a firmware file and provide a prompt to the user to confirm the choice before copying the firmware file to the media processing device's memory. For example, the media processing device may display the "FIRMWARE FOUND - PROCEED" to the user and allow for selection of "YES" or "NO". In some example embodiments, after the firmware file is transferred, a standard firmware update process may take place and may be dependent on a further user action.

In example embodiments, the media processing device may be configured to use various commands, such as Set Get Do (SGD) commands, when copying files from USB. For example, such commands may include usb.host.read_list with the following choices available:
fill_store - causes the contents of the USB mass storage device to be analyzed to create the list of files that may be copied to the media processing device's memory.
store - causes the current file (or all files if SELECT ALL) to be copied to the media processing device's memory.
fill_print - causes the contents of the USB mass storage device to be analyzed to create the list of files that may be printed. Only format files (*e.g*., .XML files, .ZPL files) will be listed.
print - causes the current file (or all files if SELECT ALL) to be printed. clear - clears the file(s) selection.
up - selects the next file in the list.
down - selects the next file in the list.

In example embodiments, when read from, usb.host.read_list may return one of:
uninitialized - indicates that the list of files available to be copied from the USB mass storage device to the media processing device's memory has not been initialized yet.
In progress - indicates that the USB mass storage device is being scanned to create the list of files available for copying.
SELECT ALL - If this value is returned and store is written to the setting then all available files will be copied from the USB mass storage device to the media processing device's memory.
<an individual file name> - If store or print is written to the setting then this named file will be copied from the USB mass storage device to the media processing device's memory.

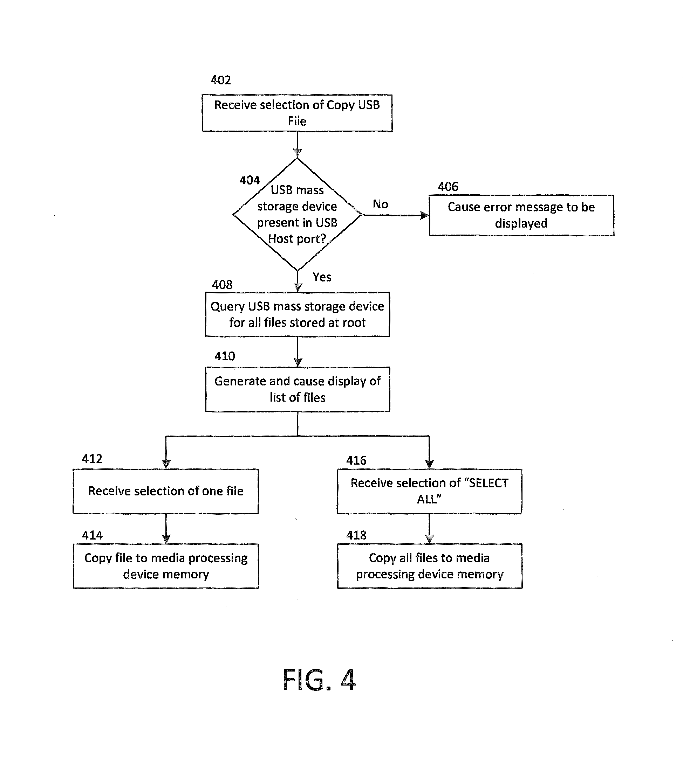

Figure 4 provides a flow chart illustrating operations to copy one or more files from a USB mass storage device using the USB Host port that may be performed by a media processing device in accordance with an example embodiment. At block 402, the media processing device may receive an indication, such as from a user, to perform operations to copy one or more files from a USB mass storage device to the media processing device's memory. At block 404, the media processing device may determine whether a USB mass storage device is connected to the USB Host port, using means such as processor 102, memory 104, USB Host circuitry 110, or the like. If no USB Mass storage device is found, an error message may be displayed indicating that no USB mass storage device was found at block 406. If a USB mass storage device is connected, operation continues to block 408. At block 408, the media processing device may query the USB mass storage device for all files stored at the root of the USB mass storage device, using means such as processor 102, memory 104, USB Host circuitry 110, or the like. At block 410, the media processing device may generate and cause a list of the found files to be displayed, using means such as processor 102, memory 104, input/output circuitry 106, USB Host circuitry 110, or the like.

At block 412, the media processing device may receive a selection of a file to be copied from the USB mass storage device, using means such as processor 102, memory 104, input/output circuitry 106, USB Host circuitry 110, or the like. At block 414, the media processing device may cause the selected file to be copied to the media processing device's memory, using means such as processor 102, memory 104, USB Host circuitry 110, or the like.

Alternatively, at block 416, the media processing device may receive a selection of a "SELECT ALL" option to copy all the files to the media processing device. At block 418, the media processing device may cause all the files to be copied to the media processing device's memory, using means such as processor 102, memory 104, USB Host circuitry 110, or the like.

### Store Files to USB

The USB host functionality may allow media processing devices to copy files from the media processing device's flash memory to a mass storage device. This transfer may be accomplished through a user interface. In some example embodiments, only readable files may be transferred from the media processing device's flash memory to a USB mass storage device. In example embodiments, the media processing device may allow for either the selection of individual files or the selection of all available files for copying to the USB mass storage device. Display screen 204 of Figure 2 illustrates an exemplary menu display of a media processing apparatus that may be used to access the Store Files to USB features.

In example embodiments, when a USB mass storage device is connected to the media processing device and this feature is selected, the media processing device may query the media processing device's memory for all files. The media processing device may allow a user to navigate through the list of files to a particular file and select the file to be stored to the USB mass storage device from the media processing device's memory. For example, the media processing device may allow a user to scroll through the list, vertically, up and down, with the top wrapping to the bottom and the bottom wrapping to the top. The media processing device may provide a "SELECT ALL" option at the top of the list of files, which when selected would cause all files in the list to be stored to the USB mass storage device. In example embodiments, the media processing device may display, such as on an LCD display, the total number of files and the progress during the copying of the files.

In example embodiments, if the selected file is a template file (*e.g*., format file, .ZPL file), the media processing device may modify (post-process) the file to convert its internal media processing device representation into a recognizable representation. Once this type of file has been modified and stored to a USB mass storage device, to load the template file on another printer for normal execution, "Print File from USB" must be used rather than "Copy file from USB".

In example embodiments, the media processing device may be configured to use various commands, such as Set Get Do (SGD) commands, when storing files to USB. For example, such commands may include usb.host.write_list with the following choices available:
fill_store - causes the contents of the media processing device's memory to be analyzed to create the list of files that may be copied to the USB mass storage device.
store - causes the current file (or all files if SELECT ALL) to be copied to the USB mass storage device.
clear - clears the file(s) selection.
up - selects the next file in the list.
down - selects the next file in the list.

In example embodiments, when read from, usb.host.read_list may return one of:
uninitialized - indicates that the list of files available to be copied from the media processing device's memory to the USB mass storage device has not been initialized yet.
In progress - Indicates that the media processing device's memory is being scanned to create the list of files available for copying.
SELECT ALL - If this value is returned and store is written to the setting then all available files will be copied from the media processing device's memory to the USB mass storage device.
<an individual file name> - If store is written to the setting then this named file will be copied from the media processing device's memory to the USB mass storage device.

In some example embodiments, the USB mass storage device must be formatted as FAT16 or FAT32 in order to use Store File to USB with the USB mass storage device.

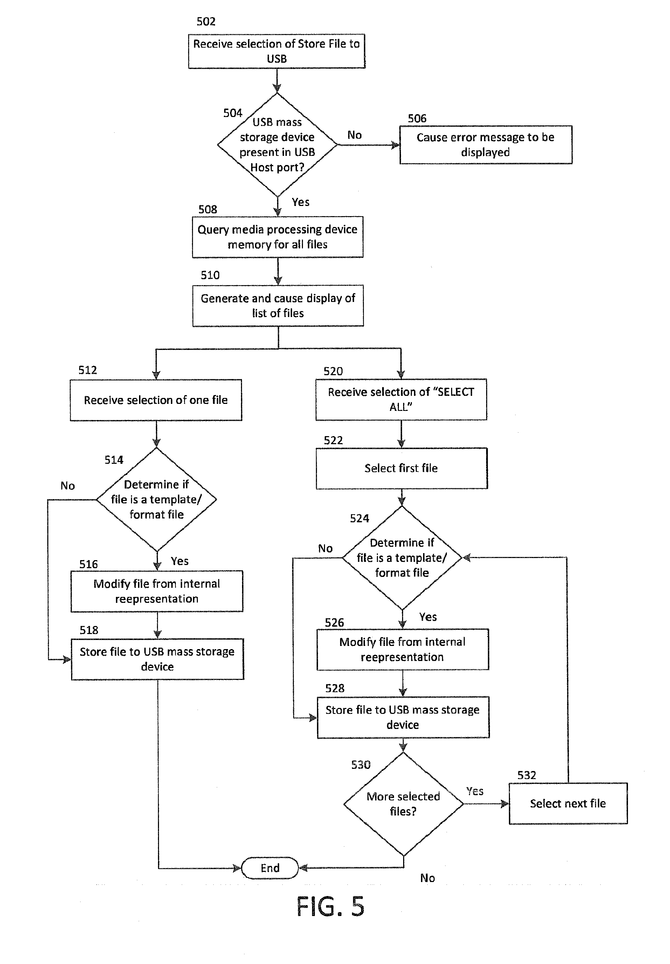

Figure 5 provides a flow chart illustrating operations that may be performed by a media processing device in accordance with an example embodiment to store one or more files from a media processing device's memory to a USB mass storage device using the USB Host port. At block 502, the media processing device may receive an indication, such as from a user, to perform operations to store one or more files from the media processing device's memory to a USB mass storage device. At block 504, the media processing device may determine whether a USB mass storage device is connected to the USB Host port, using means such as processor 102, memory 104, USB Host circuitry 110, or the like. If no USB Mass storage device is found, an error message may be displayed indicating that no USB mass storage device was found at block 506. If a USB mass storage device is connected, operation continues to block 508. At block 508, the media processing device may query the media processing device's memory for all files, using means such as processor 102, memory 104, USB Host circuitry 110, or the like. At block 510, the media processing device may generate and cause a list of the found files to be displayed, using means such as processor 102, memory 104, input/output circuitry 106, USB Host circuitry 110, or the like.

At block 512, the media processing device may receive a selection of a file to be stored to the USB mass storage device, using means such as processor 102, memory 104, input/output circuitry 106, USB Host circuitry 110, or the like. At block 514, the media processing device may determine if the selected file is a template (format) file. If the file is a template (format) file, the media processing device may modify the selected file to convert its internal media processing device representation into a recognizable representation at block 516, using means such as processor 102, memory 104, USB Host circuitry 110, or the like.

At block 518, the media processing device may cause the selected file to be stored to the USB mass storage device, using means such as processor 102, memory 104, USB Host circuitry 110, or the like. Operations may then end.

Alternatively, at block 520, the media processing device may receive a selection of a "SELECT ALL" option to store all the files to the USB mass storage device. At block 522, the media processing device may select the first of the selected files to be stored. At block 524, the media processing device may determine if the selected file is a template (format) file. If the file is a template (format) file, the media processing device may modify the selected file to convert its internal media processing device representation into a recognizable representation at block 526, using means such as processor 102, memory 104, USB Host circuitry 110, or the like.

At block 528, the media processing device may cause the selected file to be stored to the USB mass storage device, using means such as processor 102, memory 104, USB Host circuitry 110, or the like. At block 530, the media processing device may determine whether there are additional files that are to be stored to the USB mass storage device. If there are additional files to be stored, the media processing device may select the next one of the selected files to be stored at block 532 and operations may then loop back to block 524. If there are no further files to be stored to the USB mass storage device, operations may then end.

### Print USB File

Media processing devices of example embodiments may be configured to print files from a USB mass storage device. For example, a user may connect a USB thumb drive to a media processing device, and the media processing device may access the data stored within the thumb drive. Through a user interface, a user may be able to select a file and print the file from the thumb drive without requiring a separate operating system to send print commands to the media processing device. In some example embodiments, only printable files (*e*.*g*., template files such as .ZPL and/or .XML files) may be printed from the USB mass storage device on a media processing device. Display screen 206 of Figure 2 illustrates an exemplary menu display of a media processing apparatus that may be used to access the Print USB File features.

In example embodiments, when a USB mass storage device is connected to the media processing device and this feature is selected, the media processing device may query the USB mass storage device for all template files (e.g., format files, .ZPL files, .XML files, etc.) stored at the root level of the USB mass storage device. The media processing device may allow a user to navigate through the list of files to a particular file and select the file to be printed from the USB mass storage device. For example, the media processing device may allow a user to scroll through the list, vertically, up and down, with the top wrapping to the bottom and the bottom wrapping to the top. The media processing device may provide a "SELECT ALL" option at the top of the list of files, which when selected would cause all files in the list to be processed. In example embodiments, the contents of the selected file may be sent to the media processing device's parser as if it were sent via any other communication interface. In example embodiments, the media processing device may display, such as on an LCD display, the total number of files and the progress during the printing of the files.

In example embodiments, if any of the selected files contains a command to reset the media processing device, the media processing device will restart and begin sending the next file in the list of selected files once the media processing device is ready, *i.e*., the media processing device remembers where it was in processing the in the list of files before resetting. In example embodiments, this allows for reconfiguring the media processing device as part of the print process.

In some example embodiments, if the list of selected files contains a firmware file (or if the selected file is a firmware file), the media processing device may identify that file as a firmware file and provide a prompt to the user to confirm that the new firmware file should be loaded.

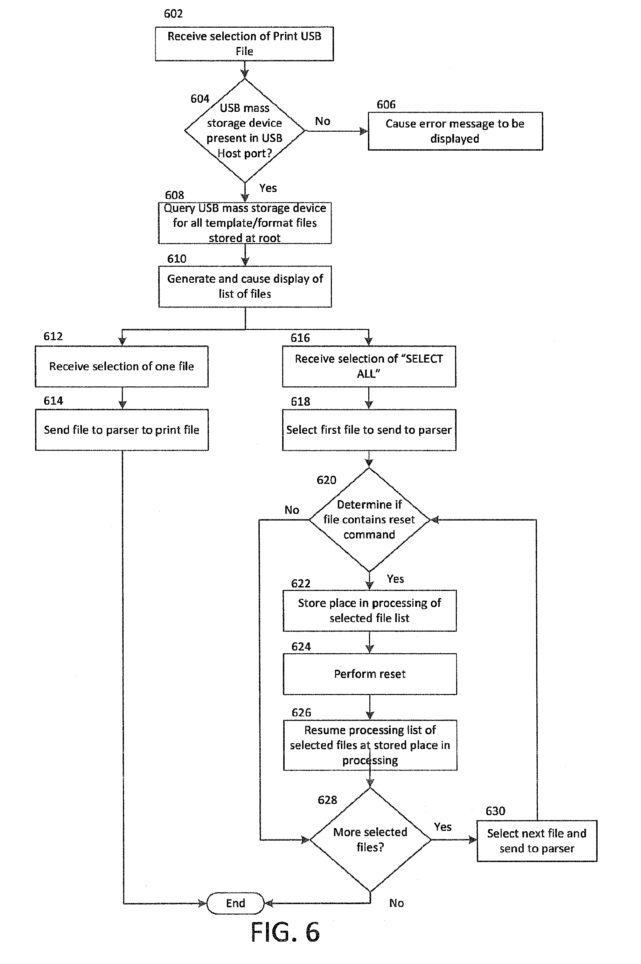

Figure 6 provides a flow chart illustrating operations that may be performed by a media processing device in accordance with an example embodiment to print one or more files from a USB mass storage device using the USB Host port. At block 602, the media processing device may receive an indication, such as from a user, to perform operations to print one or more files from a USB mass storage device. At block 604, the media processing device may determine whether a USB mass storage device is connected to the USB Host port, using means such as processor 102, memory 104, USB Host circuitry 110, or the like. If no USB Mass storage device is found, an error message may be displayed indicating that no USB mass storage device was found at block 606. If a USB mass storage device is connected, operation continues to block 608. At block 608, the media processing device may query the USB mass storage device for all template (format) files stored at the root of the USB mass storage device, using means such as processor 102, memory 104, USB Host circuitry 110, or the like. At block 610, the media processing device may generate and cause a list of the found files to be displayed, using means such as processor 102, memory 104, input/output circuitry 106, USB Host circuitry 110, or the like.

At block 612, the media processing device may receive a selection of a file to be printed from the USB mass storage device, using means such as processor 102, memory 104, input/output circuitry 106, USB Host circuitry 110, or the like. At block 614, the media processing device may send the file to the media processing device's parser to be printed, using means such as processor 102, memory 104, USB Host circuitry 110, or the like. Operations may then end.

Alternatively, at block 616, the media processing device may receive a selection of a "SELECT ALL" option to print all the found template (format) files from the USB mass storage device. At block 618, the media processing device may select the first of the selected files to be printed and send it to the media processing device's parser. At block 620, the media processing device may determine if the selected file contains a reset command. If the file contains a reset command, the media processing device may store where in the list of selected files processing was interrupted to perform the rest at block 622, using means such as processor 102, memory 104, USB Host circuitry 110, or the like. At block 624, the media processing device may perform the reset, and additionally may perform any configuration changes, etc. associated with the file contains the reset command before performing the reset.

At block 626, once the media processing device has completed the reset and is ready, the media processing device may resume processing of the selected files after the point where processing was interrupted.

At block 628, the media processing device may determine whether there are additional files that are to be printed from the USB mass storage device. If there are additional files to be stored, the media processing device may select the next one of the selected files to be printed and send it to the media processing device's parser at block 630. Operations may then loop back to block 620. If there are no further files to be printed from the USB mass storage device, operations may then end.

### Print Station

Media processing devices of example embodiments may be configured to provide Print Station whereby the media processing device may retrieve a template (format) file from its memory and display template prompts to allow a user to complete the fields of a media template file. The template file may be in a proprietary printing format, XML, or some other standard language. In some example embodiments, the print station may provide template field prompts on the media processing device's LCD display and allow a user to use a USB HID, such as a keyboard or barcode scanner, to enter field data into the media template file. Once data has been entered for all the template fields, the user may be given a choice to enter a print quantity so that the completed form can be printed. Display screen 208 of Figure 2 illustrates an exemplary menu display of a media processing apparatus that may be used to access the Print Station features.

In example embodiments, the print station feature may be accessible when a HID, e.g., keyboard, scanner, or the like, is connected to the media processing device's USB Host port and one or more templates are available on the media processing device's flash memory. The user may be provided a list of the available templates so that the user may select the desired template to be used with the media, for example, displaying a list of templates on the media processing device's LCD panel. After receiving selection of a template, the media processing device may display a template field number or field name and a cursor, allowing a user to step through the various fields in the template and provide input for each field. The user may then input data for the template field using the HID plugged into the USB Host port and the input may be displayed, for example, on the media processing device's LCD panel. After completing the input for a field, the user may provide an indication to advance to the next template field, for example using the HID or selecting a "Next" button on the media processing device. Once the template fields have been completed, the media processing device may display a final field to specify the quantity of print jobs to print with that particular format and data. The user may indicate the quantity to be printed, such as entering the quantity using the HID, e.g., keyboard, or using controls on the media processing device, e.g., using up/down arrows on the control panel of the media processing device.

The media processing device may be configured to use various commands, such as Set Get Do (SGD) commands, with Print Station. For example, such commands may include:
usb.host.keyboard_input - allow or disallow the media processing device to receive input via a USB HID device.
usb.host.template_list - provides a list of all template files available on the media processing device's flash memory, any of which may be selected, and if valid, filled in and printed. (Choices: fill - scans the contents of the media processing device's flash memory and forms a list of possible template files to choose from;
up - scroll up the list of template files; down - scroll down the list of template files).
usb.host.fn_field_list - provides a list of all the fields available in the selected template file (Choices: fill - create a list of fields contained in the selected template file; up/down - display and make a field available for editing; clear - clear out the edit field of the selected field; clear_all - clear out the edit fields of all available fields; print - causes the selected template file to be printed; first - display and make the first field available for editing.; last - display and make the last field available for editing).
usb.host.fn_field_data - provides the last edited data for a specific field entry. usb.host.fn_last_field - indicates whether the currently selected field is the last one available for the selected template file.
usb.host.template_print_amount - print quantity amount.

### Optional Display

Media processing devices of example embodiments may be configured to provide for the connection of an optional display, as an alternative to a media processing device's display, for use with on-printer applications. For example, a user may be able to connect an optional USB powered monitor to the printer for the purpose of displaying content from the printer. In example embodiments, the media processing device and/or the USB device may include support USB 3.0. In example embodiments, the media processing device and/or the USB device may include support for HTML 5, such as for displaying content from the printer on a USB connected monitor. In example embodiments, the media processing device and/or the USB device may include an updatable printer driver in the printer operating system capable of driving the monitor.

### USB Host Port Lock Out

Media processing devices of example embodiments may be configured to provide for USB Host port lock out whereby a user may be able to lock out the USB Host port for security reasons, e.g., the USB Host port will not communicate with any device attached to the port. In example embodiments, the media processing device may allow a user to unlock communications via the USB Host port using the media processing device's control panel or using a command, such as a command in a proprietary programming language, such as Zebra Programming Language (ZPL), or in a standard language, such as XML, html, or JSON.

### USB Wireless Print server

In example embodiments, the media processing device may be configured to provide USB wireless print server functionality to allow for connection to an 802.11x wireless print server. For example, a user may be able to connect and use a USB based Modem, Ethernet adaptor or Wi-Fi Adapter to the USB Host port of the media processing device.

### GPIO BOARD

Media processing devices of example embodiments may also include a general purpose input/output (GPIO) option printed circuit board (PCB). The GPIO board of example embodiments may be backwards compatible to prior media processing device versions to allow an inexpensive upgrade option rather than requiring replacement of older media processing devices to obtain improved functionality.

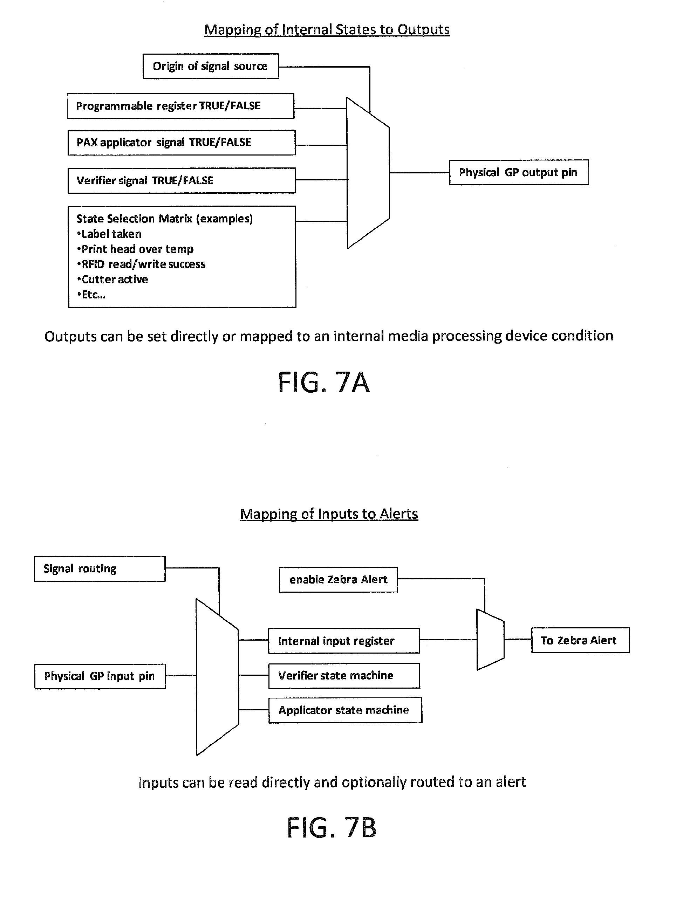

According to some embodiments, the GPIO may be configured to map internal states of the media processing device to outputs, as needed. Further, the GPIO may be configured to map inputs of the GPIO to alerts such that external signals can provide meaningful feedback to the GPIO of media processing devices. Figure 7A illustrates an exemplary mapping of internal states of the media processing device to outputs and Figure 7B illustrates an exemplary mapping of inputs of the GPIO to alerts for the media processing device. In example embodiments, the mapping of the inputs and outputs of the GPIO may be set using a proprietary programming language, such as ZPL for example.

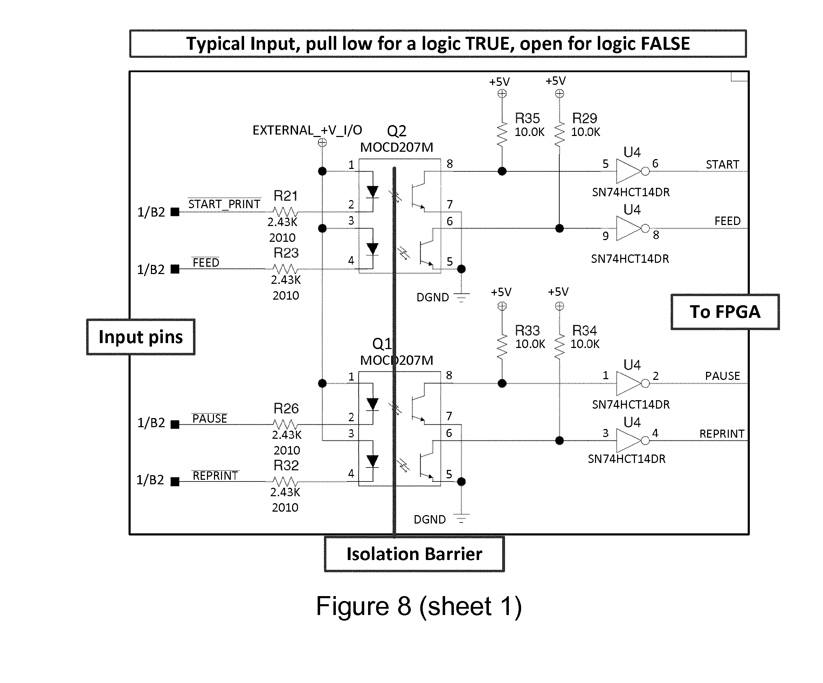

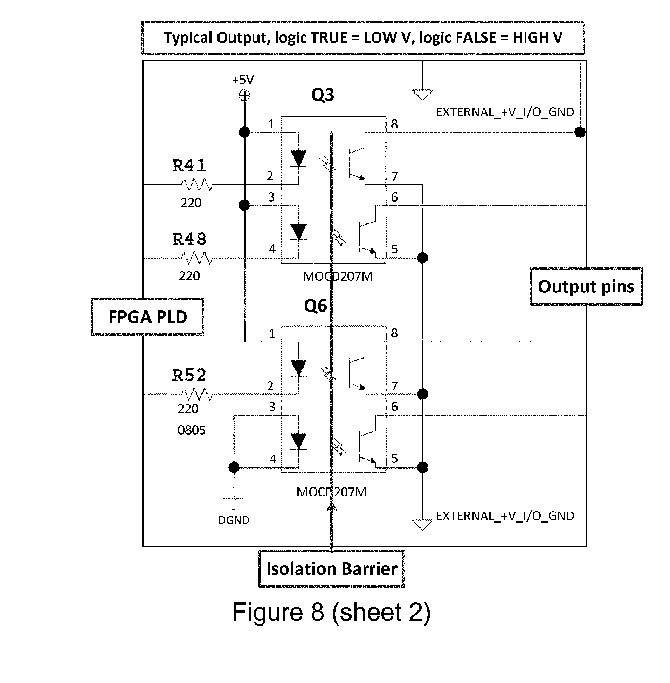

The GPIO may also be configured to introduce total galvanic isolation between the media processing device and the interface. Figure 8 illustrates an exemplary physical GPIO interface that implements total galvanic isolation between the media processing device and the interface for an exemplary input and an exemplary output. In example embodiments, the galvanic isolation allows the physical GPIO interface to always be isolated.

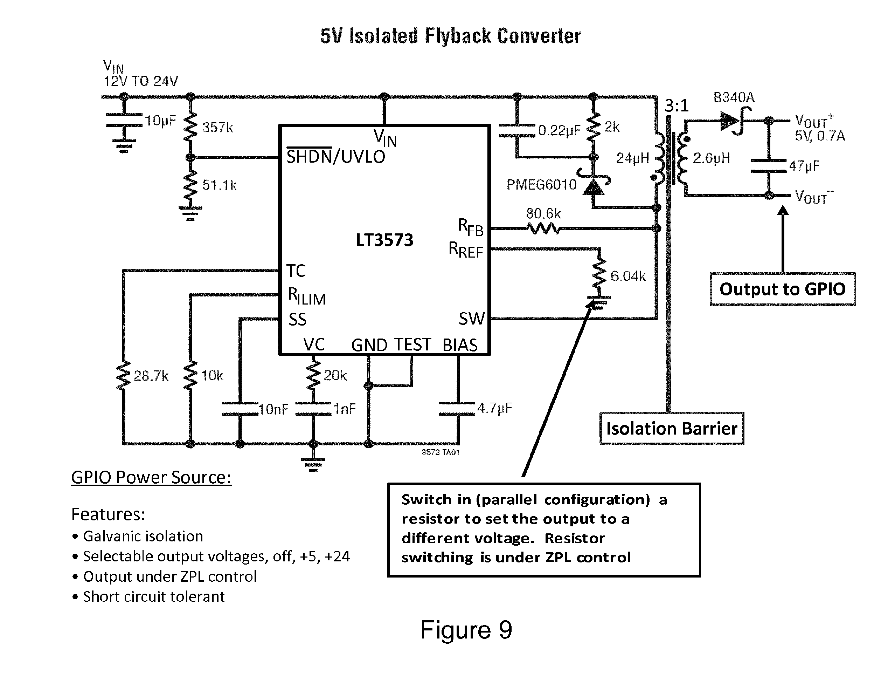

The GPIO may also be configured to provide a single power source that is fully isolated. Figure 9 illustrates an exemplary GPIO power source that is fully isolated in accordance with an example embodiment. In example embodiments, the isolation prevents back feeding high voltage into the media processing device and may prevent damage to the media processing device if the GPIO board is miswired. The GPIO may include an adjustable voltage output of 0-volts, 5-volts, and 24-volts, each of which is firmware selectable. Such a GPIO board may be configured to be received in an option slot as described above.

Details of possible GPIO option board signals in an example embodiment are outlined in Table 1.

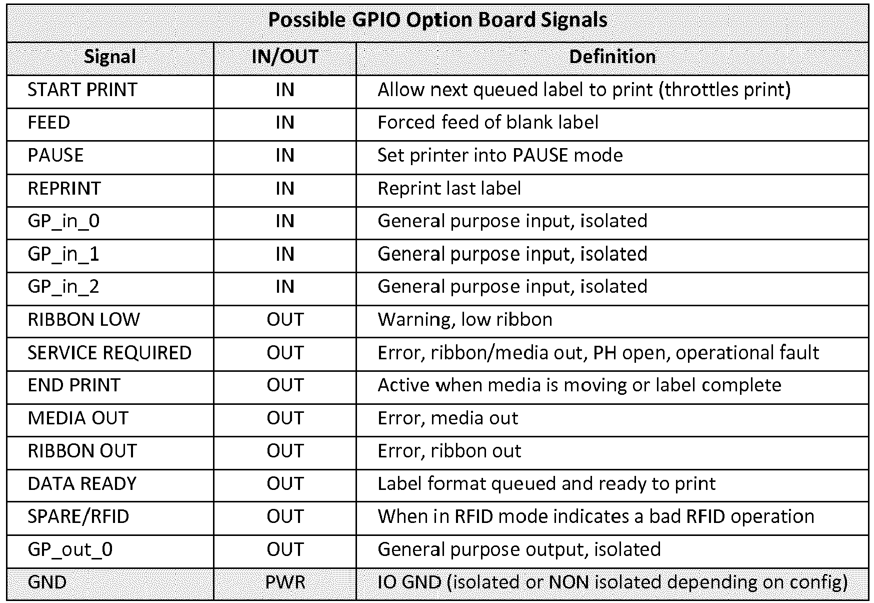

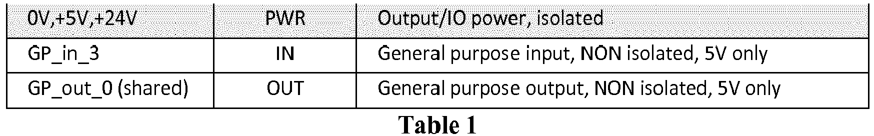

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Although specific terms are employed herein, they are used in a generic and descriptive sense only and not for purposes of limitation.

As used herein, the terms "data," "content," "information," and similar terms may be used interchangeably to refer to data capable of being transmitted, received, proxied, and/or stored in accordance with embodiments of the present invention. Thus, use of any such terms should not be taken to limit the spirit and scope of embodiments of the present invention. Further, where a computing device is described herein to receive data from another computing device, it will be appreciated that the data may be received directly from the another computing device or may be received indirectly via one or more intermediary computing devices, such as, for example, one or more servers, relays, routers, network access points, base stations, hosts, and/or the like, sometimes referred to herein as a "network." Similarly, where a computing device is described herein to send data to another computing device, it will be appreciated that the data may be sent directly to the another computing device or may be sent indirectly via one or more intermediary computing devices, such as, for example, one or more servers, relays, routers, network access points, base stations, hosts, and/or the like.

## Claims

1. An apparatus comprising at least one processor and at least one memory including computer program instructions, the at least one memory and the computer program instructions being configured to, in cooperation with the at least one processor, cause the apparatus at least to:
query a USB mass storage device for all template files stored at the root of the USB mass storage device, the USB mass storage device being connected to a USB Host port of a media processing device;
receive a selection of one or more of the template files to be processed;
send the one or more selected files to a parser of the media processing device to be processed;
wherein processing comprises determining if a selected file currently being processed comprises a reset command; and
if the selected file currently being processed comprises a reset command,
store an indication of the position within the list of selected files where the selected file currently being processed is located;
cause performance of a reset of the media processing device; and
resume processing from a position in the list of selected files based on the indication.

2. The apparatus of Claim 1 wherein the at least one memory and the computer program instructions are further configured to, in cooperation with the at least one processor, cause the apparatus to:
first determine if a USB mass storage device is connected to the USB Host port; and
if the USB mass storage device is not connected, cause an error message to be displayed.

3. The apparatus of Claims 1 or 2 wherein the processing of a selected file comprises printing the selected file.

4. The apparatus of ant one of Claims 1 to 3 wherein the at least one memory and the computer program instructions are further configured to, in cooperation with the at least one processor, cause the apparatus to modify the configuration of the media processing device based on data in the selected file containing a reset command.

5. A method comprising:
querying a USB mass storage device for all template files stored at the root of the USB mass storage device, the USB mass storage device being connected to a USB Host port of a media processing device;
receiving a selection of one or more of the template files to be processed;
sending the one or more selected files to a parser of the media processing device to be processed;
wherein processing comprises determining if a selected file currently being processed comprises a reset command; and
if the selected file currently being processed comprises a reset command,
storing an indication of the position within the list of selected files where the selected file currently being processed is located;
causing performance of a reset of the media processing device; and
resuming processing from a position in the list of selected files based on the indication.

6. An apparatus comprising at least one processor and at least one memory including computer program instructions, the at least one memory and the computer program instructions being configured to, in cooperation with the at least one processor, cause the apparatus at least to:
query a media processing device memory for files that can be stored to a USB mass storage device, the USB mass storage device being connected to a USB Host port of the media processing device;
receive a selection of one or more of the files to be stored to the USB mass storage device;
determine if one of the one or more selected files is a particular type of file, and if the one of the one or more selected files is a particular type of file, modify the file to convert it from a first representation to a second representation; and
store the one or more selected files to the USB mass storage device.

7. The apparatus of Claim 6 wherein the first representation is an internal media processing device representation and the second representation is a readable representation.

8. A method comprising:
querying a media processing device memory for files that can be stored to a USB mass storage device, the USB mass storage device being connected to a USB Host port of the media processing device;
receiving a selection of one or more of the files to be stored to the USB mass storage device;
determining if one of the one or more selected files is a particular type of file, and if the one of the one or more selected files is a particular type of file, modifying the file to convert it from a first representation to a second representation; and
storing the one or more selected files to the USB mass storage device.

9. An apparatus comprising at least one processor and at least one memory including computer program instructions, the at least one memory and the computer program instructions being configured to, in cooperation with the at least one processor, cause the apparatus at least to:
determine if a USB mass storage device comprises a predefined directory structure, the USB mass storage device being connected to a USB Host port of a media processing device; and
if the USB mass storage device comprises the predefined directory structure, process files located in the predefined directory structure automatically based on each file's directory location.

10. The apparatus of Claim 9 wherein the predefined directory structure is a mirror directory structure defined by one or more parameters.

11. The apparatus of Claim 10 wherein the mirror directory structure comprises a first subdirectory, a second subdirectory, and a third subdirectory; and wherein files located in the first subdirectory are used to update firmware for the media processing device; wherein files located in the second subdirectory are written to a memory of the media processing device; and wherein files located in the third subdirectory are caused to be executed on the media processing device.

12. The apparatus of any one of Claims 9 to 11 wherein the at least one memory and the computer program instructions are further configured to, in cooperation with the at least one processor, cause the apparatus to write a feedback file to the USB mass storage device.

13. The apparatus of any one of Claims 9 to 12 wherein the at least one memory and the computer program instructions are further configured to, in cooperation with the at least one processor, cause the apparatus to write a data file to the media processing device comprising a listing of all files mirrored from the USB mass storage device and timestamps indicating when each file was mirrored.

14. The apparatus of Claim 13 wherein the data file is used to determine whether a file on the USB mass storage device that is already listed in the data file should be processed, wherein the file on the USB mass storage device is processed if it is more recent than the timestamp for the associated file in the data file.

15. A method comprising:
determining if a USB mass storage device comprises a predefined directory structure, the USB mass storage device being connected to a USB Host port of a media processing device; and
if the USB mass storage device comprises the predefined directory structure, processing files located in the predefined directory structure automatically based on each file's directory location.
